# EUROPEAN PATENT APPLICATION

(11) **EP 3 955 191 A1**
(43) Date of publication of application: **16.02.2022**
(21) Application number: 21181233.4
(22) Date of filing: 23.06.2021
(51) Int. Cl.: G06Q 10/08, G06Q 30/00, G06Q 50/04, G06Q 50/28, G06F 16/22, G06F 16/2458, G06F 16/27, G06Q 40/02, G06Q 40/04, H04N 7/18

(54) **METHOD AND APPARATUS FOR VERIFYING COMMODITIES IN BATCHES BASED ON BLOCKCHAIN, AND ELECTRONIC DEVICE**

(30) Priority: 14.08.2020 CN 202010818563
(71) Applicant: Alipay (Hangzhou) Information Technology Co., Ltd., Hangzhou, Zhejiang 310000 (CN)
(72) Inventor: Zou, Xueqing, Hangzhou, Zhejiang, 310000 (CN)
(74) Representative: Goddar, Heinz J.

(57) **Abstract**

Embodiments of this specification provide a method and apparatus for verifying commodities in batches based on a blockchain, and an electronic device. The method includes: receiving a warehousing verification transaction sent by a warehousing party, the warehousing verification transaction including a commodity identifier acquired from any to-be-warehoused commodity and a contract address of an invoked smart contract; invoking, in response to the warehousing verification transaction, check logic declared in the smart contract corresponding to the contract address, to check the commodity identifier; invoking, in a case that the check succeeds, warehousing verification logic declared in the smart contract corresponding to the contract address, to query for a traceability identifier and a distributor identifier that are associated with the commodity identifier in the blockchain; determining target commodity identifiers that are present in both commodity identifiers associated with the distributor identifier and commodity identifiers associated with the traceability identifier; and updating states corresponding to the target commodity identifiers recorded in the blockchain to warehousing verification success in batches.

## Description

### TECHNICAL FIELD

One or more embodiments of this specification relate to the field of blockchain technologies, and in particular, to a method and apparatus for verifying commodities in batches based on a blockchain, and an electronic device.

### BACKGROUND

The blockchain technology, also referred to as a distributed ledger technology, is an emerging technology in which computing devices participate in "bookkeeping" to jointly maintain a complete distributed database. Because the blockchain technology features decentralization, openness and transparency, allowing all the computing devices to participate in database recording, and quick data synchronization between the computing devices, the blockchain technology is widely applied to a variety of fields.

### SUMMARY

Embodiments of this specification provide a method and apparatus for verifying commodities in batches based on a blockchain, and an electronic device.

According to a first aspect of the embodiments of this specification, a method for verifying commodities in batches based on a blockchain is provided. A traceability identifier associated with commodity identifiers of commodities in the same production batch and a distributor identifier associated with commodity identifiers of commodities distributed by the same distributor are recorded in the blockchain. The method includes:
receiving a warehousing verification transaction sent by a warehousing party, the warehousing verification transaction including a commodity identifier acquired by sensing hardware equipped by the warehousing party from any to-be-warehoused commodity and a contract address of an invoked smart contract;
invoking, in response to the warehousing verification transaction, check logic declared in the smart contract corresponding to the contract address, to check the commodity identifier; and
invoking, in a case that the check succeeds, warehousing verification logic declared in the smart contract corresponding to the contract address, to query for a traceability identifier and a distributor identifier that are associated with the commodity identifier in the blockchain; determining target commodity identifiers that are present in both commodity identifiers associated with the distributor identifier and commodity identifiers associated with the traceability identifier; and updating states corresponding to the target commodity identifiers recorded in the blockchain to warehousing verification success in batches.

According to a second aspect of the embodiments of this specification, an apparatus for verifying commodities in batches based on a blockchain is provided. A traceability identifier associated with commodity identifiers of commodities in the same production batch and a distributor identifier associated with commodity identifiers of commodities distributed by the same distributor are recorded in the blockchain. The apparatus includes:
a receiving unit, configured to receive a warehousing verification transaction sent by a warehousing party, the warehousing verification transaction including a commodity identifier acquired by sensing hardware equipped by the warehousing party from any to-be-warehoused commodity and a contract address of an invoked smart contract;
a check unit, configured to invoke, in response to the warehousing verification transaction, check logic declared in the smart contract corresponding to the contract address, to check the commodity identifier; and
a verification unit, configured to invoke, in a case that the check succeeds, warehousing verification logic declared in the smart contract corresponding to the contract address, to query for a traceability identifier and a distributor identifier that are associated with the commodity identifier in the blockchain; determine target commodity identifiers that are present in both commodity identifiers associated with the distributor identifier and commodity identifiers associated with the traceability identifier; and update states corresponding to the target commodity identifiers recorded in the blockchain to warehousing verification success in batches.

According to a third aspect of the embodiments of this specification, an electronic device is provided, including:
a processor; and
a memory, configured to store processor executable instructions, where
the processor is configured to any one of the foregoing methods for verifying commodities in batches based on a blockchain.

The embodiments of this specification provide a method for verifying commodities in batches based on a blockchain, where to-be-warehoused commodities are verified in batches by using a traceability identifier associated with commodity identifiers of commodities in the same production batch and a distributor identifier associated with commodity identifiers of commodities distributed by the same distributor that are stored in the blockchain. A commodity identifier of any one of to-be-warehoused commodities of a distributor is acquired, to query for a corresponding traceability identifier and distributor identifier. Then target commodity identifiers that are present in both commodity identifiers associated with the distributor identifier and commodity identifiers associated with the traceability identifier are determined. The target commodity identifiers are certainly genuine products produced in the same production batch. Therefore, states corresponding to the target commodity identifiers associated with the distributor identifier recorded in the blockchain may be updated in batches to warehousing verification success. In this way, batch verification is implemented, which effectively improves the efficiency of warehousing verification.

### BRIEF DESCRIPTION OF THE DRAWINGS

FIG. 1 is a schematic diagram of creating a smart contract according to an exemplary embodiment;
FIG. 2 is a schematic diagram of invoking a smart contract according to an exemplary embodiment;
FIG. 3 is a schematic diagram of creating a smart contract and invoking the smart contract according to an exemplary embodiment;
FIG. 4 is a schematic networking diagram of a commodity verification system built based on a blockchain according to an exemplary embodiment;
FIG. 5 is a flowchart of a method for verifying commodities in batches based on a blockchain according to an exemplary embodiment;
FIG. 6 is a schematic structural diagram of an electronic device according to an exemplary embodiment; and
FIG. 7 is a block diagram of an apparatus for verifying commodities in batches based on a blockchain according to an exemplary embodiment.

### DETAILED DESCRIPTION

Exemplary embodiments are described in detail herein, and examples of the exemplary embodiments are shown in the accompanying drawings. When the following description involves the accompanying drawings, unless otherwise indicated, the same numerals in different accompanying drawings represent the same or similar elements. The implementations described in the following exemplary embodiments are not all the implementations consistent with one or more embodiments of this specification, but are instead only examples of methods and apparatuses that are described in detail in the appended claims and that are consistent with some aspects of one or more embodiments of this specification.

It should be noted that in other embodiments, the steps of corresponding methods are not necessarily performed according to a sequence shown and described in this specification. In some other embodiments, the methods may include more or fewer steps than those described in this specification. In addition, a single step described in this specification may be divided into a plurality of steps for description in other embodiments, and a plurality of steps described in this specification may be combined into a single step for description in other embodiments.

Blockchains are generally classified into three types: a public blockchain, a private blockchain, and a consortium blockchain. In addition, there may also be a combination of the above types, such as a private blockchain + a consortium blockchain, or a consortium blockchain + a public blockchain.

The public blockchain is the most decentralized one. In the public blockchain, such as Bitcoin or Ethereum, participants (also referred to as nodes in the blockchain) joining the public blockchain can read a data record on the chain, participate in a transaction, contend for a bookkeeping right on a new block, and the like. Moreover, the nodes can freely join or exit the network and perform a related operation.

The private blockchain is opposite. The write permission of the network is controlled by an organization or institution, and data read permission is regulated by an organization. Simply put, the private blockchain may be a weakly centralized system with a strict restriction on nodes and including a relatively small quantity of nodes. This type of blockchain is more suitable for internal use in a specific institution.

The consortium blockchain is a blockchain between the public blockchain and the private blockchain, which can achieve "partial decentralization". Nodes in the consortium blockchain usually have corresponding entities or organizations. The nodes are authorized to join the network and form an interests-related consortium to jointly maintain operation of the blockchain.

Based on a basic feature of the blockchain, the blockchain usually includes a plurality of blocks. Timestamps corresponding to creation moments of the blocks are respectively recorded in the blocks. All the blocks form a time-ordered data chain in strict accordance with the timestamps recorded in the blocks.

For real data generated in the physical world, the real data can be constructed in a standard transaction format supported by the blockchain, and then published to the blockchain. Node devices in the blockchain perform consensus processing on a received transaction, and after a consensus is reached, a node device used as a bookkeeping node in the blockchain packages the transaction into a block for persistent storage in the blockchain.

Consensus algorithms supported by the blockchain may include:
a first-type consensus algorithm, that is, a consensus algorithm in which node devices need to contend for a bookkeeping right of each round of bookkeeping cycle, for example, a Proof of Work (PoW) consensus algorithm, a Proof of Stake (PoS) consensus algorithm, or a Delegated Proof of Stake (DPoS) consensus algorithm; and
a second-type consensus algorithm, that is, a consensus algorithm in which a bookkeeping node is selected in advance for each round of bookkeeping cycle (without contention for a bookkeeping right), for example, a Practical Byzantine Fault Tolerance (PBFT) consensus algorithm.

In a blockchain network using the first-type consensus algorithm, after receiving a transaction, all node devices that contend for the bookkeeping right can execute, the transaction. Among the node devices contending for the bookkeeping right, one node device may win a current round of contention for the bookkeeping right and become a bookkeeping node. The bookkeeping node may package the received transaction together with other transactions to generate a candidate block, and send the generated candidate block or a block header of the candidate block to other node devices for consensus.

In a blockchain network using the second-type consensus algorithm, the node device with the bookkeeping right has been agreed before the current round of bookkeeping. Therefore, after receiving a transaction, if a node device is not the bookkeeping node of the current round, the transaction may be sent to the bookkeeping node. For the bookkeeping node of the current round, the transaction can be executed during or before a process of packaging the transaction together with other transactions to generate a candidate block. After generating the candidate block, the bookkeeping node may send the candidate block or a block header of the candidate block to other node devices for consensus.

As described above, regardless of which consensus algorithm described above is adopted by the blockchain, the bookkeeping node in the current round may package the received transaction to generate the candidate block, and send the generated candidate block or the block header of the candidate block to the other node devices for verification and consensus. If verification succeeds after the other node devices receive the candidate block or the block header of the candidate block, the candidate block may be added to the end of the original blockchain as the latest block, to complete a bookkeeping process of the blockchain. In a process of verifying the new block or the block header sent by the bookkeeping node, the other nodes can also execute transactions included in the block.

In the field of blockchains, account is an important concept. For example, in Ethereum, accounts are usually classified into an external account and a contract account. The external account, also referred to as a user account, is an account directly controlled by a user, while the contract account is an account created by the user through the external account and including contract code (that is, a smart contract).

Certainly, for some blockchain models (for example, an Ant blockchain) derived based on an Ethereum architecture, account types supported by the blockchain can also be further extended, which is not particularly limited in this specification.

For the account in the blockchain, a structure is usually used to maintain an account state of the account. After the transaction in the block is executed, an account state related to the transaction in the blockchain usually changes.

Using Ethereum as an example, a structure of the account usually includes fields such as Balance, Nonce, Code, and Storage.

The Balance field is used for maintaining a current account balance of the account.

The Nonce field is used for maintaining a quantity of transactions of the account, and is a counter used for ensuring that each transaction can be processed and can be processed only once, to effectively avoid a replay attack.

The Code field is used for maintaining the contract code of the account. In an actual application, the Code field usually maintains only a hash value of the contract code. Therefore, the Code field is also commonly referred to as a Codehash field.

The Storage field is used for maintaining storage content (a default field value is null) of the account. For the contract account, an independent storage space is usually allocated to store the storage content of the contract account. The independent storage space is usually referred to as an account storage of the contract account. The storage content of the contract account is usually constructed in a data structure of a Merkle Patricia Trie (MPT) tree and stored in the independent storage space. The MPT tree constructed based on the storage content of the contract account is also commonly referred to as a storage tree. The Storage field usually maintains only a root node of the storage tree. Therefore, the Storage field is also commonly referred to as a StorageRoot field.

For the external account, field values of the Code field and the Storage field described above are both null values.

For most blockchain models, data is usually stored and maintained by using a Merkle tree or based on a data structure of the Merkle tree. For example, in Ethereum, an MPT tree (a variant of the Merkle tree) is used as a form of data organization to organize and manage important data such as an account state and transaction information.

In Ethereum, three MPT trees are designed for data that needs to be stored and maintained in the blockchain, namely, an MPT state tree, an MPT transaction tree, and an MPT receipt tree. In addition to the above three MPT trees, there is actually a storage tree constructed based on the storage content of the contract account.

The MPT state tree is an MPT tree organized by account state data of all accounts in the blockchain. The MPT transaction tree is an MPT tree organized by transaction data in the blockchain. The MPT receipt tree is an MPT tree organized by a transaction receipt corresponding to each transaction generated after the transaction in the block is executed. Hash values of root nodes of the MPT state tree, MPT transaction tree, and MPT receipt tree described above are all added to a block header of a corresponding block eventually.

The MPT transaction tree and the MPT receipt tree correspond to a block, that is, each block has its own MPT transaction tree and MPT receipt tree. The MPT state tree is a global MPT tree, which does not correspond to a specific block, but covers account state data of all accounts in the blockchain.

The organized MPT transaction tree, MPT receipt tree, and MPT state tree are eventually stored in a database of a Key-Value type (for example, a LevelDB) that uses a multi-level data storage structure.

The database that uses the multi-level data storage structure usually may be divided into n levels of data storage. For example, the levels of data storage may be sequentially set as L0, L1, L2, L3, ..., and L(n-1). For the levels of data storage in the database, a smaller level number generally indicates a higher rank. For example, data of latest blocks is stored in L0, data of later blocks is stored in L1, and so on.

Read and write performance of storage media corresponding to the levels of data storage generally may also be different. For example, read and write performance of a storage medium corresponding to data storage with a high rank (that is, with a smaller level number) may be higher than read and write performance of a storage medium corresponding to data storage with a low rank. In an actual application, for data storage with a high rank, a storage medium with higher storage costs and better storage performance may be used, while for data storage with a low rank, a storage medium with low unit costs and a relatively large capacity may be used.

In an actual application, as a block number (also referred to as a block height) of the blockchain grows, data stored in the database includes a lot of historical data. Moreover, a smaller block number indicates that data stays longer in the block and is less important. Therefore, to reduce overall storage costs, data of different block heights may usually be "differently treated". For example, data in a block with a smaller block number may be stored on a storage medium with lower costs, while data in a block with a larger block number is stored on a storage medium with higher costs.

It should be noted that every time a latest block is generated in the blockchain, after transactions in the latest block are executed, account states of accounts (which may be external accounts or contract accounts) related to the executed transactions in the blockchain usually change accordingly.

For example, when a "transfer transaction" in the block is executed, balances of a transferor account and a transferee account that are related to the "transfer transaction" (that is, field values of Balance fields of the accounts) usually change accordingly.

For a node device, after the transaction in the latest block generated by the blockchain is completed, because a current account state in the blockchain changes, the node device needs to construct an MPT state tree according to current account state data of all accounts in the blockchain, to maintain latest states of all the accounts in the blockchain.

That is, every time a latest block is generated in the blockchain, and after a transaction in the latest block is executed, an account state in the blockchain changes, the node device needs to construct a new MPT state tree based on latest account state data of all accounts in the blockchain. In other words, each block in the blockchain has a corresponding MPT state tree. The MPT state tree maintains the latest account state of all the accounts in the blockchain after the transaction in the block is executed.

A description is made by using the MPT state tree organized by account state data of the blockchain as an example.

The MPT tree is a conventional and improved variant of the Merkle tree, which combines advantages of the Merkle tree and a dictionary tree (Trie) (also referred to as a prefix tree).

There are usually three types of data nodes in the MPT tree, namely, a leaf node, an extension node, and a branch node.

The extension node, expressed as a key-value pair of [key, value]. The key is a special hexadecimal coded character that represents a shared character prefix of an account address. The shared character prefix refers to a prefix including the same one or more characters of a plurality of blockchain account addresses. The value is a hash value (hash pointer) of another node, that is, the another node may be linked to by using the hash pointer.

The branch node includes 17 elements, the first 16 elements correspond to 16 possible hexadecimal characters in the key, and one character corresponds to a nibble (a half byte), which respectively represent a shared character prefix (which is one character in length) of an account address. If there is a [key, value] pair that terminates at this branch node, the branch node may act as a leaf node, and the last element represents a value of the leaf node. Conversely, the last element of the branch node may have a null value.

The leaf node is a key-value pair expressed as [key, value]. The key is a special hexadecimal coded character that represents a character suffix of an account address. The character suffix of the account address and the shared character prefix of the account address jointly form a complete account address. The character suffix refers to a suffix including the last one or more characters except the shared character prefix of the account address. The value is state data (that is, the structure described above) of the account address corresponding to the leaf node.

On the MPT tree, characters on a search path from a root node to a leaf node form a complete account address. Therefore, the branch node may be either a termination node of the search path or an intermediate node of the search path.

It is assumed that account state data that needs to be organized into an MPT state tree is shown in Table 1 below:

**Table 1**

| Account address (Key) | | | | | | | Account state (Value) |
|---|---|---|---|---|---|---|---|
| a | 7 | 1 | 1 | 3 | 5 | 5 | state 1 |
| a | 7 | 7 | d | 3 | 3 | 7 | state2 |
| a | 7 | f | 9 | 3 | 6 | 5 | state3 |
| a | 7 | 7 | d | 3 | 9 | 7 | state4 |

In Table 1, the account address is a character string including hexadecimal characters. The account state is a structure including the foregoing fields such as Balance, Nonce, Code, and Storage.

Finally, an MPT state tree is organized according to the account state data in Table 1. The MPT state tree includes four leaf nodes, two branch nodes, and two extension nodes (one of the extension nodes is used as a root node).

The prefix field is a prefix field shared by the extension node and the leaf node. Different field values of the prefix field may be used for representing different node types.

For example, a value of the prefix field being 0 represents that the extension node includes an even quantity of nibbles. As mentioned above, a nibble represents a half byte, and includes four binary bits. One nibble may correspond to a character of an account address. The value of the prefix field being 1 represents that the extension node includes an odd quantity of nibbles. The value of the prefix field being 2 represents that the leaf node includes an even quantity of nibbles. The value of the prefix field being 3 represents that the leaf node includes an odd quantity of nibbles.

The branch node is a prefix node of a parallel single nibble. Therefore, the branch node does not have the prefix field.

A Shared nibble field in the extension node corresponds to a value of the key of the key-value pair included in the extension node, and represents a common character prefix between the account addresses. For example, all the account addresses in the above table have a common character prefix a7. A hash value (hash pointer) of a next node is filled in a Next Node field.

The hexadecimal character 0 to f fields in the branch node correspond to a value of the key of the key-value pair included in the branch node. If the branch node is an intermediate node on the search path of the account address on the MPT tree, a Value field of the branch node may have a null value. The 0 to f fields are used for filling a hash value of a next node.

The key-end in the leaf node corresponds to the value of the key of the key-value pair included in the leaf node, and represents the last few characters of the account address (the character suffix of the account address). Values of keys of nodes on the search path from the root node to the leaf node form a complete account address. A Value field of the leaf node is filled with account state data corresponding to the account address. For example, the structure including the foregoing Balance field, Nonce field, Code field, and Storage field may be encoded and then filled into the Value field of the leaf node.

Further, the node on the MPT state tree is finally stored in a database in a form of a key-value pair.

When the node on the MPT state tree is stored in the database, the key in the key-value pair of the node on the MPT state tree may be a hash value of data content included in the node, and the value in the key-value pair of the node on the MPT state tree is the data content included in the node.

That is, when the node on the MPT state tree is stored in the database, the hash value of the data content included in the node may be calculated (that is, perform hash calculation on the entire node), the calculated hash value is used as a key, and the data content included in the node is used as a value, to generate a key-value pair. Then, the generated key-value pair is stored in the database.

Because the node on the MPT state tree is stored by using the hash value of the data content included in the node as a key and using the data content included in the node as a value, when the node on the MPT state tree needs to be queried, content addressing may usually be performed based on the hash value of the data content included in the node as key.

Through "content addressing", some nodes with "repetitive content" may usually be "multiplexed" to save a storage space for data storage.

Multiplexing of a node on an MPT state tree is further described. It should be noted that in an actual application, after the transaction in the latest block generated by the blockchain is completed, account states of only some accounts may be changed. Therefore, when constructing an MPT state tree, it is unnecessary to construct a new complete MPT state tree based on current state data of all accounts in the blockchain, but only update, based on an MPT state tree corresponding to a block before the latest block, the nodes corresponding to the accounts whose account states are changed. For nodes in the MPT state tree that correspond to accounts whose account states are not changed, because data update does not occur on the nodes, corresponding nodes on the MPT state tree corresponding to the block before the latest block may be directly multiplexed.

It is assumed that the account state data in Table 1 is the latest account state of all the accounts on the blockchain after a transaction in Block N is executed. An MPT state tree is organized based on the account state data in Table 1.

It is assumed that after a transaction in Block N+1 is executed, the account state in Table 1 with the account address "a7f9365" is updated from "state3" to "state5". In this case, when the MPT state tree is updated for Block N+1, it is unnecessary to construct a new MPT state tree based on the current state data of all the accounts in the blockchain after the transaction in Block N+1 is executed.

In this case, only Value in the leaf node whose "key-end" is "9365" on the MPT state tree corresponding to Block N needs to be updated from "state3" to "state5", and hash pointers of all nodes on a path from a root node to the leaf node are further updated.

That is, when the leaf node on the MPT state tree is updated, because an overall hash value of the leaf node is updated, the hash pointers of all the nodes on the path from the root node to the leaf node are also updated accordingly.

For example, in addition to updating Value in the leaf node whose "key-end" is "9365", a hash pointer that is filled in an f field of a previous branch node of the leaf node and points to the leaf node also needs to be updated. Further, the root node may be traced, to further update a hash pointer that is filled in a "Next Node" field of a previous root node (a root extension node) of the branch node and points to the branch node.

Except the nodes that are updated above, for other nodes that are not updated, corresponding nodes on the MPT state tree of Block N may be directly multiplexed.

The MPT tree corresponding to Block N needs to be retained as historical data in the end. Therefore, when the MPT state tree is updated for Block N+1, the updated nodes are not directly modified or updated based on an original node on the MPT state tree corresponding to Block N. Instead, the updated nodes are recreated on the MPT tree corresponding to Block N+1. That is, on the MPT state tree corresponding to Block N+1, actually, only a small quantity of updated nodes need to be recreated. For other nodes that are not updated, corresponding nodes on the MPT state tree corresponding to Block N may be directly multiplexed.

For example, on the MPT state tree corresponding to Block N+1, actually, only an extension node used as a root node, a branch node, and a leaf node need to be recreated. For a node that is not updated, "multiplexing" of the nodes may be completed by adding a hash pointer pointing to the corresponding node on the MPT state tree corresponding to Block N to the recreated nodes on the MPT state tree, and nodes before update on the MPT state tree corresponding to Block N are stored as historical account state data. For example, the leaf node whose "key-end" is "9365" and Value is "state3" is retained as historical data.

In the foregoing examples, an example in which a small quantity of nodes on the MPT state tree of Block N+1 are updated and most of nodes of the previous Block N may be "multiplexed" is used for description. In an actual application, compared with the previous Block N, the MPT state tree of Block N+1 may have a newly added node. In this case, the newly added node cannot be directly "multiplexed" from the MPT tree of the previous Block N, but may be "multiplexed" from an MPT state tree of an earlier block.

For example, the newly added node on the MPT state tree of Block N+1 has not appeared on the MPT state tree of Block N, but may have appeared on the MPT state tree of the earlier block, for example, on an MPT state tree of Block N-1. Therefore, the newly added node on the MPT state tree of Block N+1 can be obtained by directly multiplexing a corresponding node on the MPT state tree of Block N-1.

In an actual application, any one of the public blockchain, the private blockchain, and the consortium blockchain may provide a function of a smart contract. A smart contract on a blockchain is a contract that can be triggered by a transaction to be executed on the blockchain. The smart contract may be defined in a form of code.

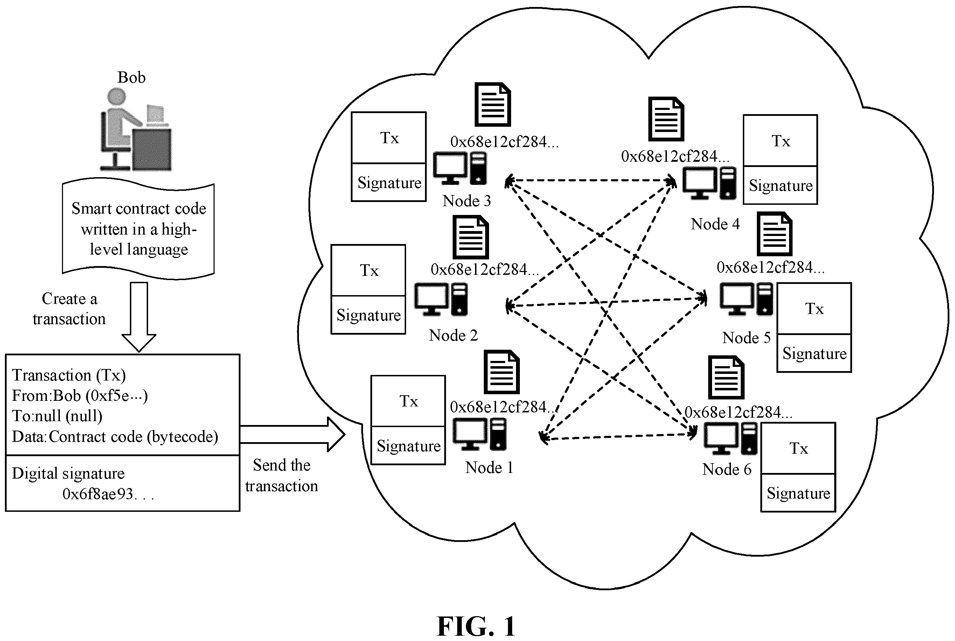

For example, Ethereum supports a user in creating and invoking some complex logic in an Ethereum network. Ethereum is a programmable blockchain, and a core of Ethereum is an Ethereum virtual machine (EVM). The EVM can run on each Ethereum node. The EVM is a Turing-complete virtual machine, and various complex logic may be implemented by using the EVM. The smart contract published and invoked by the user in Ethereum is run on the EVM. Actually, the EVM directly runs virtual machine code (virtual machine bytecode, hereinafter referred to as "bytecode"). Therefore, the smart contract deployed on the blockchain may be bytecode. As shown in FIG. 1, after Bob sends a transaction including information for creating a smart contract to an Ethereum network, each node can execute the transaction in an EVM. In FIG. 1, a From field of the transaction is used for recording an address of an account that initiates the creation of the smart contract, contract code stored in a field value of a Data field of the transaction may be bytecode, and a field value of a To field of the transaction is a null account. After the nodes reach an agreement through a consensus mechanism, the smart contract is successfully created, and subsequent users can invoke the smart contract.

After the smart contract is created, a contract account corresponding to the smart contract appears on the blockchain and has a specific address. For example, "0x68e12cf284... " in each node in FIG. 1 represents the address of the contract account created, and contract code and account storage are stored in the account storage of the contract account. Behavior of the smart contract is controlled by the contract code, and the account storage of the smart contract stores a state of the contract. In other words, the smart contract enables a virtual account including contract code and the account storage to be generated on the blockchain.

As mentioned above, the Data field including a transaction for creating a smart contract may store the bytecode of the smart contract. The bytecode includes a string of bytes, and each byte can identify an operation. Considering aspects such as development efficiency and readability, a developer can select a high-level language to write smart contract code instead of directly writing the bytecode. For example, the high-level language may be a language such as a Solidity language, a Serpent language, or an LLL language. The smart contract code written in the high-level language may be compiled by a compiler to generate bytecode that may be deployed on the blockchain.

For example, contract code written in the Solidity language is very similar to a class in an object-oriented programming language. A plurality of members such as a state variable, a function, a function modifier, and an event may be declared in a contract. The state variable is a value permanently stored in the account storage field of the smart contract, and is used for storing a state of the contract.

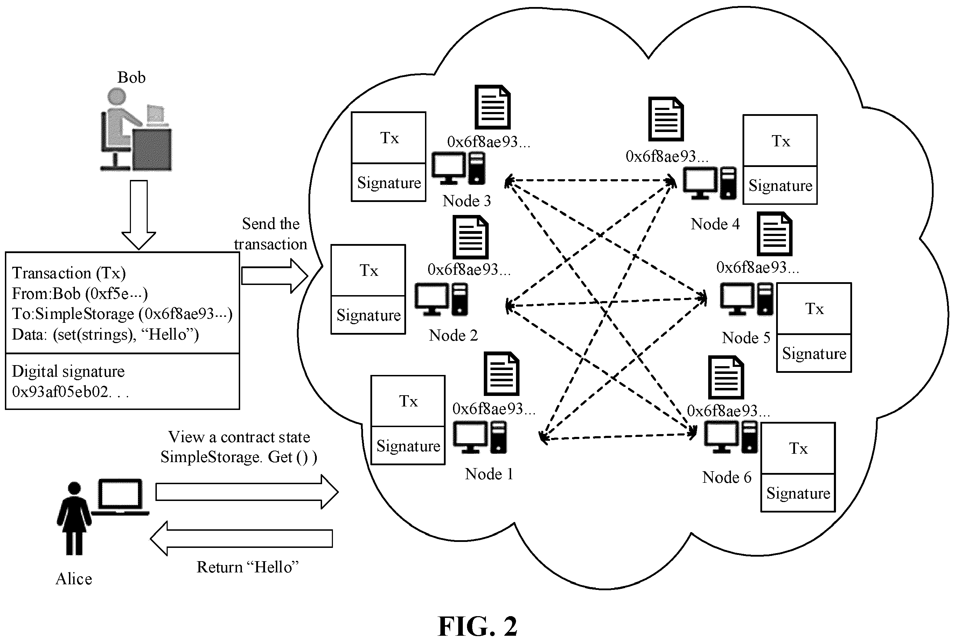

As shown in FIG. 2, Ethereum is still used as an example. After Bob sends a transaction including information for invoking a smart contract to an Ethereum network, each node can execute the transaction in an EVM. In FIG. 2, a From field of the transaction is used for recording an address of an account that initiates the invocation of the smart contract, a To field is used for recording an address of the invoked smart contract, and a Data field of the transaction is used for recording a method and a parameter for invoking the smart contract. After the smart contract is invoked, an account state of the contract account may be changed. Subsequently, a specific client may view the account state of the contract account by accessing a blockchain node (for example, a node 1 in FIG. 2).

The smart contract may be executed independently on each node in the blockchain network in a specified manner. All execution records and data are stored on the blockchain. Therefore, after such a transaction is executed, a transaction credential that cannot be tampered with or lost is stored on the blockchain.

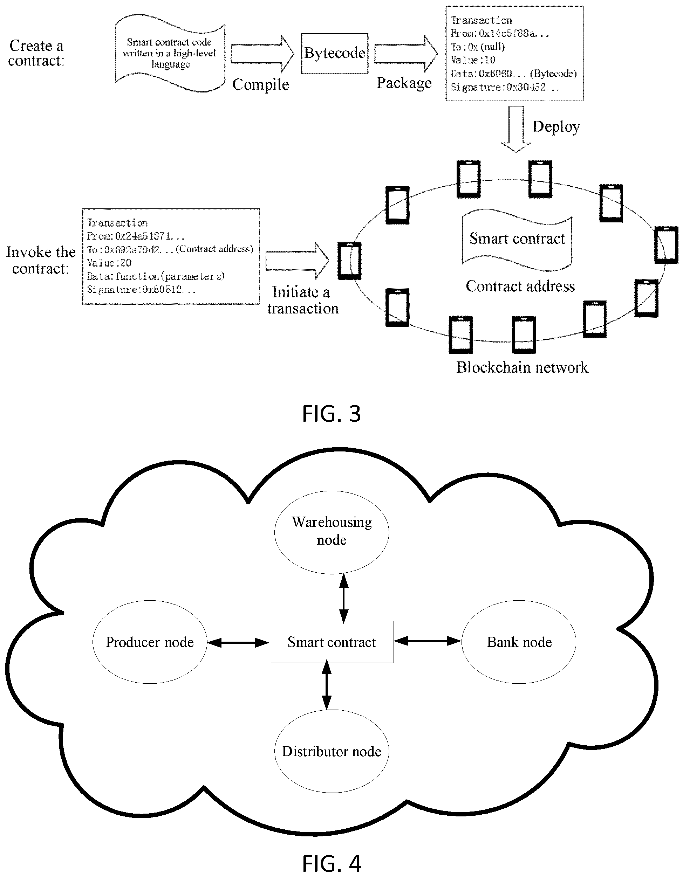

FIG. 3 is a schematic diagram of creating a smart contract and invoking the smart contract. To create a smart contract in Ethereum, processes of writing a smart contract, turning the smart contract into bytecode, deploying the smart contract in the blockchain, and the like need to be performed. Invoking the smart contract in Ethereum is to initiate a transaction pointing to an address of the smart contract. An EVM of each node can execute the transaction, and smart contract code is run in the virtual machine of each node in an Ethereum network in a distributed manner.

A conventional blockchain model such as Ethereum, in order to achieve "value transfer" on the blockchain, usually supports conversion of a currency in the real world into a virtual token that can be circulated on the chain.

However, in the field of blockchains, some blockchain models (for example, an Ant blockchain) derived based on an Ethereum architecture usually do not support a function of converting a currency in the real world into a virtual token that can be circulated on the chain. Instead, in the blockchain models, some non-monetary real assets in the real world can be converted into virtual assets that can be circulated on the blockchain.

It should be noted that converting non-monetary real assets in the real world into virtual assets on the blockchain usually refers to a process of "anchoring" the real assets with the virtual assets on the blockchain as value support of the virtual assets, and then generating, on the blockchain, the virtual assets that match values of the real assets and can be circulated between blockchain accounts on the blockchain.

During implementation, account types supported by the blockchain may be expanded, to add an asset account (also referred to as an asset object) based on the account types supported by the blockchain. For example, an asset account may be added based on an external account and a contract account supported by Ethereum. The added asset account is a virtual asset that can use the non-monetary real asset in the real world as value support and can be circulated between the blockchain accounts.

For a user who accesses such a blockchain, in addition to completing creation of a user account and a smart contract on the blockchain, the user may further create a virtual asset that matches value of a non-monetary real asset in the real world to circulate on the blockchain.

For example, the user may convert held non-monetary real assets such as real estate, stocks, loan contracts, notes, and receivables into value-matched virtual assets to circulate on the blockchain.

An account state of the asset account may also be maintained by using a structure. Content included in the structure of the asset account may be the same as that of Ethereum, and certainly, may alternatively be designed based on actual requirements.

In an implementation, for example, the content included in the structure of the asset account is the same as that of Ethereum. The structure of the asset account may also include the foregoing described fields such as Balance, Nonce, Code, and Storage.

It should be noted that in Ethereum, the Balance field is usually used for maintaining a current account balance of an account. However, for the blockchain model derived based on the Ethereum architecture, because the blockchain model may not support conversion of a currency in the real world into a virtual token that can be circulated on the chain, in such a blockchain, a meaning of the Balance field may be expanded so that the field does not represent a "balance" of an account, and but is used for maintaining address information of the asset account corresponding to "virtual assets" held in the account. In an actual application, address information of asset accounts corresponding to a plurality of "virtual assets" may be maintained in the Balance field.

In this case, the external account, the contract account, and the asset account described above may hold, by adding address information of an asset account corresponding to a "virtual asset" that needs to be held to the Balance field, the virtual asset. That is, in addition to the external account and the contract account, the asset account may also hold virtual assets.

For the asset account, field values of the Nonce field and the Code field may be null values, while a field value of the Storage field may not be a null value. The Storage field may be used for maintaining an asset state of a "virtual asset" corresponding to the asset account. A specific manner of maintaining the asset state of the "virtual asset" corresponding to the asset account in the Storage field may be flexibly designed based on requirements, and details are not described herein.

In the blockchain model derived based on the Ethereum architecture, a user may create, on the blockchain through the implementation described below, a virtual asset that matches value of a non-monetary real asset in the real world.

In an implementation, transaction types supported by the blockchain may be expanded to add a transaction for creating a virtual asset. For example, transaction types supported by Ethereum usually include an ordinary transfer transaction, a transaction for creating a smart contract, and a transaction for invoking a smart contract. Based on the three types of transactions, a transaction for creating a virtual asset may further be added.

In this case, the user may publish a transaction for creating a virtual asset to a blockchain network by using a client, and a node device in the blockchain executes the transaction in a local EVM to create the virtual asset for the user. After the node devices reach an agreement through a consensus mechanism, the virtual asset is successfully created, and an asset account corresponding to the virtual asset appears on the blockchain and has a specific address.

In another implementation, a smart contract for creating a virtual asset may alternatively be deployed on the blockchain. A process of deploying the smart contract for creating a virtual asset is not described herein again.

In this case, the user may publish a transaction for invoking the smart contract to a blockchain network by using a client, and a node device in the blockchain executes the transaction in a local EVM and runs contract code related to the smart contract in the EVM, to create the virtual asset for the user. After the node devices reach an agreement through a consensus mechanism, the virtual asset is successfully created, and an asset account corresponding to the virtual asset appears on the blockchain and has a specific address.

Certainly, if some blockchain models derived based on the Ethereum architecture also support the function of converting the currency in the real world into the virtual token that can be circulated on the chain, some non-monetary real assets in the real world may still be converted into virtual tokens that can be circulated on the blockchain. Details are not described herein again.

In a cross-chain scenario, a plurality of blockchains may be connected by using a cross-chain relay.

The cross-chain relay may be connected to the plurality of blockchains by using a bridge interface, and complete synchronization of cross-chain data between the plurality of blockchains based on implemented data transport logic.

The cross-chain technology used to implement the cross-chain relay is not particularly limited in this specification. For example, in an actual application, the plurality of blockchains may be connected through a cross-chain mechanism such as a side-chain technology or a notary technology.

After the plurality of blockchains are connected by using the cross-chain relay, each blockchain may read and verify data on another blockchain, and may invoke, by using the cross-chain relay, a smart contract deployed on the another blockchain.

It should be noted that the cross-chain relay is only used for transporting data among the plurality of blockchains, and does not need to persistently store the transported data, nor does it need to maintain a data state of the transported data. In an actual application, the cross-chain relay may be configured at a device, a node, or a platform other than the plurality of blockchains connected to the cross-chain relay, or may be configured at a node device of the plurality of blockchains connected to the cross-chain relay, which is not particularly limited in this specification.

The smart contract deployed on the blockchain can usually refer to only data content stored on the blockchain. In an actual application, for some complex service scenarios implemented based on a smart contract technology, the smart contract may further need to refer to some external data on an off-chain data entity.

In such a scenario, the smart contract deployed on the blockchain may refer to the data on the off-chain data entity by using an oracle, to implement data exchange between the smart contract and the data entity in the real world. The off-chain data entity may include, for example, a centralized server, a data center, or the like deployed outside the chain.

It should be noted that the cross-chain relay is used for connecting two blockchains, and the oracle is used for connecting the blockchain and the off-chain data entity, to implement data exchange between the blockchain and the real world.

In an actual application, when the oracle is deployed for the smart contract on the blockchain, an oracle smart contract corresponding to the oracle may first be deployed on the blockchain. The oracle smart contract is used for maintaining external data sent by the oracle to the smart contract on the blockchain. For example, the external data sent by the oracle to the smart contract on the blockchain may be stored in an account storage space of the oracle smart contract.

When a target smart contract on the blockchain is invoked, external data required by the target smart contract can be read from the account storage space of the oracle smart contract, to complete a process of invoking the smart contract.

It should be noted that an active sending manner or a passive sending manner may be used when the oracle sends the external data to the smart contract on the blockchain.

In an implementation, the off-chain data entity may sign, by using a private key of the oracle, the external data that needs to be provided to the target smart contract and then send the signed external data to the oracle smart contract. For example, during implementation, the signed external data may be sent to the oracle smart contract in a periodic sending manner.

The oracle smart contract can maintain a CA certificate of the oracle. After the external data sent by the off-chain data entity is received, a public key of the oracle maintained in the CA certificate can be used for verifying the signature of the external data, and after the verification succeeds, the external data sent by the off-chain data entity is stored in the account storage space of the oracle smart contract.

In another implementation, when the target smart contract on the blockchain is invoked, if the external data required by the target smart contract is not read from the account storage space of the oracle smart contract, the oracle smart contract may interact with the oracle by using an event mechanism of the smart contract, and the external data required by the target smart contract is sent by the oracle to the account storage space of the oracle smart contract.

For example, when the target smart contract on the blockchain is invoked, if the external data required by the target smart contract is not read from the account storage space of the oracle smart contract, the oracle smart contract may generate an external data obtaining event, record the external data obtaining event in a transaction log of a transaction that invokes the smart contract, and store the transaction log in a storage space of a node device. The oracle may listen to the transaction log that is generated by the oracle smart contract and that is stored in the storage space of the node device, and after detecting the external data obtaining event in the transaction log, send the external data required by the target smart contract to the oracle smart contract in response to the detected external data obtaining event.

The event mechanism of the smart contract is a manner for the smart contract to interact with an off-chain entity. The smart contract deployed on the blockchain usually cannot directly interact with an off-chain entity. For example, after the smart contract is invoked, an invocation result of the smart contract usually cannot be sent to an invocation initiator of the smart contract in a point-to-point manner.

The invocation result (including an intermediate result and a final invocation result) generated by the smart contract during the invocation is usually recorded, in a form of an event, in a transaction log of a transaction that invokes the smart contract, and stored in the storage space of the node device. The off-chain entity that needs to interact with the smart contract may obtain the invocation result of the smart contract by listening to the transaction log stored in the storage space of the node device.

For example, in Ethereum, the transaction log is eventually stored in the foregoing described MPT receipt tree as a part of a transaction receipt of the transaction that invokes the smart contract. The off-chain entity interacting with the smart contract may listen to the transaction receipt on the MPT receipt tree stored in the storage space of the node device, and obtain an event generated by the smart contract from the detected transaction receipt.

This specification is intended to provide a technical solution of verifying to-be-warehoused commodities in batches by using a traceability identifier associated with commodity identifiers of commodities in the same production batch and a distributor identifier associated with commodity identifiers of commodities distributed by the same distributor that are stored in a blockchain. In addition, a commodity pledge service may further be provided to the distributor for financing. Specifically, inventory commodities of the distributor in a warehouse are verified in batches, to ensure that pledged commodities are kept in the warehouse and are all genuine. In this way, a bank provides a loan to the distributor by using the commodities of the distributor in the warehouse as a pledge.

FIG. 4 is a schematic networking diagram of a commodity verification system built based on a blockchain according to an embodiment of this specification.

As shown in FIG. 4, the commodity verification system for verifying a commodity is built based on a blockchain network. A traceability identifier associated with commodity identifiers of commodities in the same production batch and a distributor identifier associated with commodity identifiers of commodities distributed by the same distributor are recorded in the blockchain network, and the traceability identifier may be indirectly associated with the distributor identifier through the same commodity identifier. The commodity identifier is a unique identifier assigned by a producer of commodities to each produced commodity. The traceability identifier is a unique identifier assigned by a producer of commodities to all commodities in the same production batch. The distributor identifier is a unique identifier assigned to all commodities distributed by a distributor.

The blockchain network includes a producer node that produces a commodity, a warehousing node that stores a commodity, a distributor node that distributes a commodity, a bank node that provides a distributor with funds, a user node that uses a commodity, and the like. The nodes may access the blockchain network as blockchain node devices.

The warehousing node may be equipped with sensing hardware, monitor, by using the sensing hardware, a commodity to be warehoused or in a warehouse in real time, and publish monitoring data to the blockchain for storage. A producer, a warehousing party, a distributor, a bank, and a user can access a corresponding node based on a client corresponding to the commodity verification system to access the blockchain.

As shown in FIG. 4, a smart contract for managing a commodity is deployed on the blockchain. After the smart contract is created, a contract account corresponding to the smart contract appears on the blockchain and has a specific contract account address. The producer, the warehousing party, the distributor, the bank, and the user can view an account state of the contract account by accessing a corresponding blockchain node based on a held client.

Specifically, code logic corresponding to contract code in the smart contract includes check logic for checking a distributor identifier of a commodity, verification logic for verifying a commodity, and logic for executing other service functions.

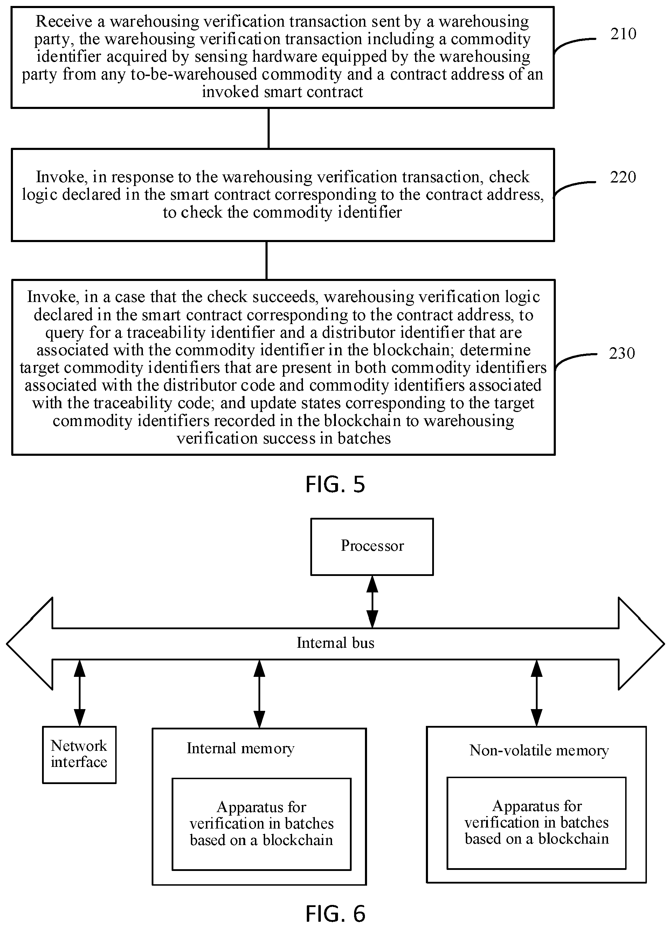

Further, description is made with reference to a flowchart of a method for verifying commodities in batches based on a blockchain in FIG. 5. As described above, a traceability identifier associated with commodity identifiers of commodities in the same production batch and a distributor identifier associated with commodity identifiers of commodities distributed by the same distributor are recorded in the blockchain. A smart contract for verifying a commodity is deployed in the blockchain, and code logic corresponding to contract code in the smart contract includes check logic for verifying a distributor identifier and verification logic for verifying a commodity. The method may specifically include the following steps:
Step 210. Receive a warehousing verification transaction sent by a warehousing party, the warehousing verification transaction including a commodity identifier acquired by sensing hardware equipped by the warehousing party from any to-be-warehoused commodity and a contract address of an invoked smart contract.
Step 220. Invoke, in response to the warehousing verification transaction, check logic declared in the smart contract corresponding to the contract address, to check the commodity identifier.
Step 230. Invoke, in a case that the check succeeds, warehousing verification logic declared in the smart contract corresponding to the contract address, to query for a traceability identifier and a distributor identifier that are associated with the commodity identifier in the blockchain; determine target commodity identifiers that are present in both commodity identifiers associated with the distributor identifier and commodity identifiers associated with the traceability identifier; and update states corresponding to the target commodity identifiers recorded in the blockchain to warehousing verification success in batches.

This embodiment of this specification may be applied to a commodity verification system built based on a blockchain network. For a networking architecture of the system, refer to FIG. 4 and the foregoing related description of FIG. 4. Details are not described herein again.

The blockchain described in this specification may specifically include any type of blockchain network that a producer node, a warehousing node, a distributor node, and a user node access as members.

In an implementation, the blockchain is a consortium blockchain, and the producer node, the warehousing node, the distributor node, and the user node may all be added to the blockchain as member devices.

In this specification, a commodity identifier, a traceability identifier, and a distributor identifier stored in the blockchain may be chained up for storage by a producer of a commodity.

Generally, in a production stage, for a produced commodity, a unique commodity identifier may be assigned. In addition, for commodities produced in the same batch, the same traceability identifier may further be assigned. Similarly, the traceability identifier is also a unique identifier. One traceability identifier represents one production batch. Therefore, the commodities produced in the same batch may correspond to the same traceability identifier. One traceability identifier may correspond to a plurality of commodity identifiers.

In a stage in which a producer sends commodities to a distributor, the same distributor identifier may be assigned to the commodities distributed to the same distributor. The distributor identifier is also a unique identifier. One distributor identifier represents one distribution. Therefore, commodities distributed by the same distributor may correspond to the same distributor identifier. That is, one distributor identifier may correspond to a plurality of commodity identifiers.

The "identifier" (including the commodity identifier, the traceability identifier, the distributor identifier, and the like) in this specification may be presented in a form of a graphic code. Using a commodity two-dimensional code as an example, after a commodity is produced, a commodity two-dimensional code uniquely corresponding to the commodity may be printed on the surface of the commodity, or may be made into a commodity two-dimensional code sticker pasted on the surface of the commodity.

In an embodiment, the traceability identifier and corresponding commodity identifiers, and the distributor identifier and corresponding commodity identifiers can be respectively chained up for storage by the producer. In this way, the traceability identifier associated with the commodity identifiers of the commodities in the same production batch and the distributor identifier associated with the commodity identifiers of the commodities distributed by the same distributor may be recorded in the blockchain.

In this specification, a warehousing party may be used for providing a distributor with capabilities to store commodities. When the distributor needs to store distributed commodities at a warehousing party, the warehousing party needs to verify the to-be-warehoused commodities.

The warehousing party may be equipped with offline sensing hardware, and the sensing hardware can monitor commodities in a warehouse in real time.

For example, in an actual application, the sensing hardware may include video acquisition hardware (for example, a camera), wireless sensing acquisition hardware (for example, RFID tag acquisition hardware), and graphic code scanning hardware (for example, graphic code scanning hardware).

In an actual verification process, the warehousing party may organize a commodity identifier acquired by the sensing hardware from any to-be-warehoused commodity and the contract address of the smart contract deployed on the blockchain into a warehousing verification transaction, and send the warehousing verification transaction to the blockchain network.

After receiving the warehousing verification transaction, any node device in the blockchain network invokes, in response to the warehousing verification transaction, check logic declared in the smart contract corresponding to the contract address, to check the commodity identifier.

The checking the commodity identifier may refer to querying whether the commodity identifier is stored in the blockchain. If not, it means that a commodity corresponding to the commodity identifier is non-genuine. If yes, it means that a commodity corresponding to the commodity identifier is genuine, and subsequent verification logic can be performed.

In a case that the check succeeds, verification logic declared in the smart contract corresponding to the contract address is invoked, to query a traceability identifier and a distributor identifier that are associated with the commodity identifier in the blockchain.

In this case, a correspondence between the traceability identifier and the distributor identifier may be established through the commodity identifier.

Further, commodity identifiers (hereinafter referred to as first-type commodity identifiers) of the same production batch associated with the traceability identifier and commodity identifiers (hereinafter referred to as a second-type commodity identifiers) distributed by the same distributor that are associated with the distributor identifier may be obtained, which is equivalent to constructing a comparison channel between the first-type commodity identifiers and the second-type commodity identifiers.

Through comparison between the first-type commodity identifiers and the second-type commodity identifiers, a common target commodity identifier (hereinafter referred to as a third-type commodity identifier) may be obtained.

To the least extent, the third-type commodity identifier includes only the commodity identifier in the warehousing verification transaction, that is, in the commodity identifiers associated with the distributor identifier, only the commodity identifier in the warehousing verification transaction is a commodity in one batch.

To the most extent, the third-type commodity identifier includes all the second-type commodity identifiers, that is, the commodity identifiers associated with the distributor identifier are all commodities in the same batch.

A quantity range of the third-type commodity identifier is [1, m], where m is a quantity of the commodity identifiers associated with the distributor identifier.

After the target commodity identifiers are determined, because the target commodity identifiers correspond to both the traceability identifier and the distributor identifier, it indicates that commodities corresponding to the target commodity identifiers are commodities in the same production batch. Therefore, states corresponding to the target commodity identifiers recorded in the blockchain may be updated to warehousing verification success in batches.

According to the foregoing embodiments, only one to-be-warehoused commodity needs to be verified to determine in batches that other commodities are also genuine. In this way, it is unnecessary to check each commodity one by one, thereby improving the efficiency of warehousing verification.

In this specification, a storage location identifier associated with commodity identifiers of commodities at the same storage location is further recorded in the blockchain. The method further includes:
receiving an inventory verification transaction sent by the warehousing party after the distributor pledges commodities to a bank, the inventory verification transaction including a storage location identifier that is acquired by the sensing hardware equipped by the warehousing party and that is of a storage location at which the commodities of the distributor are stored, and the contract address of the invoked smart contract;
invoking, in response to the inventory verification transaction, the check logic declared in the smart contract corresponding to the contract address, to check the storage location identifier; and
invoking, in a case that the check succeeds, inventory verification logic declared in the smart contract corresponding to the contract address; determining target commodity identifiers that are present in both commodity identifiers associated with the distributor identifier and commodity identifiers associated with the storage location identifier; and updating states corresponding to the target commodity identifiers recorded in the blockchain to inventory verification success in batches, for the bank to issue a loan to the distributor when determining that state data corresponding to the commodities pledged by the distributor is inventory verification success.

According to this embodiment, when the distributor pledges commodities in a warehouse to the bank, inventory commodities of the distributor in the warehouse are verified in batches by the warehousing party, to ensure that the pledged commodities are kept in the warehouse and are all genuine. In this way, the bank provides a loan to the distributor by using the commodities of the distributor in the warehouse as a pledge.

In this specification, in an embodiment, after the bank issues the loan, the method may further include:
receiving a loan receiving transaction sent by the distributor after the distributor receives the loan issued by the bank; and
invoking, in response to the loan receiving transaction, ownership change logic declared in the smart contract corresponding to the contract address, to update ownership corresponding to the commodity identifiers associated with the distributor identifier stored in the blockchain from the distributor to the bank.

In this specification, in an embodiment, the distributor repays on schedule, and the method may further include:
receiving a loan repayment transaction sent by the bank after the bank receives the loan repaid by the distributor; and
invoking, in response to the loan repayment transaction, the ownership change logic declared in the smart contract corresponding to the contract address, to update the ownership corresponding to the commodity identifiers associated with the distributor identifier stored in the blockchain from the bank to the distributor.

In this specification, in an embodiment, the distributor does not repay on schedule, and the method may further include:
receiving a loan overdue transaction sent by the bank after the bank receives the loan repaid by the distributor; and
invoking, in response to the loan overdue transaction, the ownership change logic declared in the smart contract corresponding to the contract address, to update the ownership corresponding to the commodity identifiers associated with the distributor identifier stored in the blockchain from the distributor to the bank.

In this specification, a technical solution in which a commodity is verified by a user as a consumer is further provided, including:
receiving a use verification transaction sent by a user, the use verification transaction including a commodity identifier of a commodity acquired by sensing hardware equipped by the user and the contract address of the invoked smart contract; and
invoking, in response to the use verification transaction, commodity verification logic declared in the smart contract corresponding to the contract address, and returning information that the commodity is genuine to the user in a case of learning through query that the commodity identifier is stored in the blockchain.

In an actual application, the commodity identifier may include a commodity two-dimensional code on an outer package of the commodity. The sensing hardware equipped by the user may be code scanning hardware (for example, a camera that scans a two-dimensional code). The user determines whether the current commodity is genuine by "scanning for verification".

In this specification, a warehouse space managed by a warehousing party may be monitored in real time, and when it is detected that a safety hazard occurs, detected evidence indicating the safety hazard is automatically chained up for storage.

In an embodiment, the method further includes:
receiving an environmental monitoring transaction sent by the warehousing party, the environmental monitoring transaction including environmental data that is acquired by environmental sensing hardware equipped by the warehousing party and that is greater than a preset environmental threshold, and the contract address of the invoked smart contract; and
invoking, in response to the environmental monitoring transaction, environmental monitoring logic declared in the smart contract corresponding to the contract address, to store the environmental data in the blockchain.

In this specification, environmental sensing hardware may be distributed in the warehouse space managed by the warehousing party. The environmental sensing hardware is used for monitoring environmental data in the warehouse space in real time, and reporting the environmental data to the warehousing node in a case of detecting that the environmental data is greater than the preset environmental threshold, for the warehousing node to send the environmental monitoring transaction.

Types of the environmental data include temperature, humidity, dust concentration, hazardous gas concentration, and the like. Correspondingly, the environmental sensing hardware may include a temperature sensor, a humidity sensor, and the like.

In an embodiment, the method further includes:
receiving a video surveillance transaction sent by the warehousing party, the video surveillance transaction including video data that is of potential safety hazards in a warehouse space and that is acquired by video sensing hardware equipped by the warehousing party, and the contract address of the invoked smart contract; and
invoking, in response to the video surveillance transaction, video surveillance logic declared in the smart contract corresponding to the contract address, to store the video data in the blockchain.

In this specification, video sensing hardware (for example, video surveillance cameras) may be distributed in the warehouse space managed by the warehousing party. The video sensing hardware is used for acquiring video data of the warehouse space in real time. Moreover, the warehousing party may further recognize, from the video data based on an image recognition technology, whether there is a potential safety hazard in the warehouse space, and report the video data found to have the safety hazard in the warehouse space to the warehousing node, for the warehousing node to send the video surveillance transaction.

Corresponding to the foregoing method embodiments, this specification further provides embodiments of an apparatus.

Corresponding to the foregoing method embodiments, this specification further provides embodiments of an apparatus for verifying commodities in batches based on a blockchain.

The embodiments of the apparatus for verifying commodities in batches based on a blockchain in this specification is applicable to an electronic device. The apparatus embodiments may be implemented by using software, hardware, or a combination of software and hardware. Using a software implementation as an example, as a logical apparatus, the apparatus is formed by reading corresponding computer program instructions from a non-volatile memory into an internal memory by a processor of an electronic device where the apparatus is located.

On a hardware level, as shown in FIG. 6, which is a hardware structural diagram of an electronic device in which an apparatus for verifying commodities in batches based on a blockchain according to this specification is located, the electronic device in which the apparatus is located in an embodiment not only includes a processor, a memory, a network interface, and a non-transitory storage shown in FIG. 6, but usually may also include other hardware according to actual functions of the electronic device. Details will not be repeated herein.

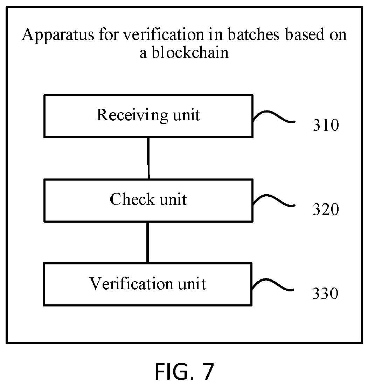

FIG. 7 is a block diagram of an apparatus for verifying commodities in batches based on a blockchain according to an exemplary embodiment of this specification. The apparatus for verifying commodities in batches based on a blockchain is applicable to the electronic device shown in FIG. 6. A traceability identifier associated with commodity identifiers of commodities in the same production batch and a distributor identifier associated with commodity identifiers of commodities distributed by the same distributor are recorded in the blockchain. The apparatus corresponds to the method embodiment shown in FIG. 5, and may specifically include:
a receiving unit 310, configured to receive a warehousing verification transaction sent by a warehousing party, the warehousing verification transaction including a commodity identifier acquired by sensing hardware equipped by the warehousing party from any to-be-warehoused commodity and a contract address of an invoked smart contract;
a check unit 320, configured to invoke, in response to the warehousing verification transaction, check logic declared in the smart contract corresponding to the contract address, to check the commodity identifier; and
a verification unit 330, configured to invoke, in a case that the check succeeds, warehousing verification logic declared in the smart contract corresponding to the contract address, to query for a traceability identifier and a distributor identifier that are associated with the commodity identifier in the blockchain; determine target commodity identifiers that are present in both commodity identifiers associated with the distributor identifier and commodity identifiers associated with the traceability identifier; and update states corresponding to the target commodity identifiers recorded in the blockchain to warehousing verification success in batches.

Optionally, a storage location identifier associated with commodity identifiers of commodities at the same storage location is further recorded in the blockchain.

The receiving unit 310 is further configured to receive an inventory verification transaction sent by the warehousing party after the distributor pledges commodities to a bank, the inventory verification transaction including a storage location identifier corresponding to the distributor identifier acquired by the sensing hardware equipped by the warehousing party and the contract address of the invoked smart contract.

The check unit 320 is further configured to invoke, in response to the inventory verification transaction, the check logic declared in the smart contract corresponding to the contract address, to check the storage location identifier.

The apparatus further includes:
a pledge unit, configured to invoke, in a case that the check succeeds, inventory verification logic declared in the smart contract corresponding to the contract address, to query for a distributor identifier associated with the storage location identifier in the blockchain; determine target commodity identifiers that are present in both commodity identifiers associated with the distributor identifier and commodity identifiers associated with the storage location identifier; and update states corresponding to the target commodity identifiers recorded in the blockchain to inventory verification success in batches, for the bank to issue a loan to the distributor when determining that state data corresponding to the commodities pledged by the distributor is inventory verification success.

Optionally, the receiving unit 310 is further configured to receive a loan receiving transaction sent by the distributor after the distributor receives the loan issued by the bank.

The pledge unit is further configured to invoke, in response to the loan receiving transaction, ownership change logic declared in the smart contract corresponding to the contract address, to update ownership corresponding to the commodity identifiers associated with the distributor identifier stored in the blockchain from the distributor to the bank.

Optionally, the receiving unit 310 is further configured to receive a loan repayment transaction sent by the bank after the bank receives the loan repaid by the distributor.

The pledge unit is further configured to invoke, in response to the loan repayment transaction, the ownership change logic declared in the smart contract corresponding to the contract address, to update the ownership corresponding to the commodity identifiers associated with the distributor identifier stored in the blockchain from the bank to the distributor.

Optionally, the receiving unit 310 is further configured to receive a loan overdue transaction sent by the bank after the bank receives the loan repaid by the distributor.

The pledge unit is further configured to invoke, in response to the loan overdue transaction, the ownership change logic declared in the smart contract corresponding to the contract address, to update ownership corresponding to the commodity identifiers associated with the distributor identifier stored in the blockchain from the distributor to the bank.

Optionally, the receiving unit 310 is further configured to receive a use verification transaction sent by a user, the use verification transaction including a commodity identifier of a commodity acquired by sensing hardware equipped by the user and the contract address of the invoked smart contract.

The verification unit 330 is further configured to invoke, in response to the use verification transaction, commodity verification logic declared in the smart contract corresponding to the contract address, and return information that the commodity is genuine to the user in a case of learning through query that the commodity identifier is stored in the blockchain.

Optionally, the receiving unit 310 is further configured to receive an environmental monitoring transaction sent by the warehousing party, the environmental monitoring transaction including environmental data that is acquired by environmental sensing hardware equipped by the warehousing party and that is greater than a preset environmental threshold, and the contract address of the invoked smart contract.

The apparatus further includes:
a monitoring unit, configured to invoke, in response to the environmental monitoring transaction, environmental monitoring logic declared in the smart contract corresponding to the contract address, to store the environmental data in the blockchain.

Optionally, the receiving unit 310 is further configured to receive a video surveillance transaction sent by the warehousing party, the video surveillance transaction including video data that is of potential safety hazards in a warehouse space and that is acquired by video sensing hardware equipped by the warehousing party, and the contract address of the invoked smart contract.

The apparatus further includes:
a monitoring unit, configured to invoke, in response to the video surveillance transaction, video surveillance logic declared in the smart contract corresponding to the contract address, to store the video data in the blockchain.

The system, the apparatus, the module, or the unit described in the foregoing embodiments may be implemented by a computer chip or an entity, or implemented by a product having a certain function. A typical implementation device is a computer. A form of the computer may be a personal computer, a laptop computer, a cellular phone, a camera phone, a smartphone, a personal digital assistant, a media player, a navigation device, an email transceiver device, a game console, a tablet computer, a wearable device, or a combination of any devices of these devices.

In a typical configuration, the computer includes one or more processors (CPUs), an input/output interface, a network interface, and a memory.

The memory may include a form such as a volatile memory, a random-access memory (RAM) and/or a non-volatile memory such as a read-only memory (ROM) or a flash RAM in a computer-readable medium. The memory is an example of the computer-readable medium.

The computer-readable medium includes a non-volatile medium and a volatile medium, a removable medium and a non-removable medium, which may implement storage of information by using any method or technology. The information may be a computer-readable instruction, a data structure, a program module, or other data. Examples of a storage medium of a computer include, but are not limited to, a phase-change memory (PRAM), a static random-access memory (SRAM), a dynamic random-access memory (DRAM), a RAM of another type, a random access memory (ROM), an electrically erasable programmable read-only memory (EEPROM), a flash memory or another memory technology, a compact disc read-only memory (CD-ROM), a digital versatile disc (DVD) or another optical storage device, a cassette tape, a magnetic disk storage, a quantum memory, a graphene-based storage medium or another magnetic storage device, or any other non-transmission medium, which may be configured to store information accessible by a computing device. According to limitations of this specification, the computer-readable medium does not include transitory computer-readable media, such as a modulated data signal and a modulated carrier.

It should be further noted that the terms "include", "comprise", or any variants thereof are intended to cover a non-exclusive inclusion. Therefore, a process, method, article, or device that includes a series of elements not only includes such elements, but also includes other elements not specified expressly, or may include inherent elements of the process, method, article, or device. Without further limitation, the element defined by a phrase "include one" does not exclude other same elements in the process, method, article or device which include the element.

Embodiments of this specification are described above. Other embodiments fall within the scope of the appended claims. In some cases, the actions or steps recorded in the claims may be performed in sequences different from those in the embodiments and an expected result may still be achieved. In addition, the processes depicted in the accompanying drawings are not necessarily performed in the specific order or successively to achieve an expected result. In some implementations, multitasking and parallel processing may be feasible or beneficial.

The terms used in one or more embodiments of this specification are merely used to describe the embodiments but are not intended to limit one or more embodiments of this specification. The "a" and "the" in a singular form used in one or more embodiments of this specification and the appended claims are also intended to include a plural form, unless other meanings are clearly indicated in the context. It should be further understood that the term "and/or" used herein indicates and includes any or all possible combinations of one or more associated listed items.

It should be understood that although the terms "first," "second," "third," and the like may be used to describe various information in one or more embodiments of this specification, such information should not be limited to these terms. These terms are merely used to distinguish between information of the same type. For example, without departing from the scope of one or more embodiments of this specification, first information may also be referred to as second information. Similarly, second information may also be referred to as first information. Depending on the context, for example, the word "if" used herein may be interpreted as "while" or "when," or "in response to determination."

The foregoing descriptions are merely exemplary embodiments of one or more embodiments of this specification, but are not intended to limit the one or more embodiments of this specification. Any modification, equivalent replacement, or improvement made within the spirit and principle of one or more embodiments of this specification shall fall within the protection scope of the one or more embodiments of this specification.

## Claims

1. A method for verifying commodities in batches based on a blockchain, wherein a traceability identifier associated with commodity identifiers of commodities in the same production batch and a distributor identifier associated with commodity identifiers of commodities distributed by the same distributor are recorded in the blockchain, and the method comprises:
receiving a warehousing verification transaction sent by a warehousing party, the warehousing verification transaction comprising a commodity identifier acquired by sensing hardware equipped by the warehousing party from any to-be-warehoused commodity and a contract address of an invoked smart contract;
invoking, in response to the warehousing verification transaction, check logic declared in the smart contract corresponding to the contract address, to check the commodity identifier; and
invoking, in a case that the check succeeds, warehousing verification logic declared in the smart contract corresponding to the contract address, to query for a traceability identifier and a distributor identifier that are associated with the commodity identifier in the blockchain; determining target commodity identifiers that are present in both commodity identifiers associated with the distributor identifier and commodity identifiers associated with the traceability identifier; and updating states corresponding to the target commodity identifiers recorded in the blockchain to warehousing verification success in batches.

2. The method according to claim 1, wherein a storage location identifier associated with commodity identifiers of commodities at the same storage location is further recorded in the blockchain, and the method comprises:
receiving an inventory verification transaction sent by the warehousing party after the distributor pledges commodities to a bank, the inventory verification transaction comprising a storage location identifier corresponding to the distributor identifier acquired by the sensing hardware equipped by the warehousing party and the contract address of the invoked smart contract;
invoking, in response to the inventory verification transaction, the check logic declared in the smart contract corresponding to the contract address, to check the storage location identifier; and
invoking, in a case that the check succeeds, inventory verification logic declared in the smart contract corresponding to the contract address, to query for a distributor identifier associated with the storage location identifier in the blockchain; determining target commodity identifiers that are present in both commodity identifiers associated with the distributor identifier and commodity identifiers associated with the storage location identifier; and updating states corresponding to the target commodity identifiers recorded in the blockchain to inventory verification success in batches, for the bank to issue a loan to the distributor when determining that state data corresponding to the commodities pledged by the distributor is inventory verification success.

3. The method according to claim 2, further comprising:
receiving a loan receiving transaction sent by the distributor after the distributor receives the loan issued by the bank; and
invoking, in response to the loan receiving transaction, ownership change logic declared in the smart contract corresponding to the contract address, to update ownership corresponding to the commodity identifiers associated with the distributor identifier stored in the blockchain from the distributor to the bank.

4. The method according to claim 3, further comprising:
receiving a loan repayment transaction sent by the bank after the bank receives the loan repaid by the distributor; and
invoking, in response to the loan repayment transaction, the ownership change logic declared in the smart contract corresponding to the contract address, to update the ownership corresponding to the commodity identifiers associated with the distributor identifier stored in the blockchain from the bank to the distributor.

5. The method according to claim 3, further comprising:
receiving a loan overdue transaction sent by the bank after the bank receives the loan repaid by the distributor; and
invoking, in response to the loan overdue transaction, the ownership change logic declared in the smart contract corresponding to the contract address, to update the ownership corresponding to the commodity identifiers associated with the distributor identifier stored in the blockchain from the distributor to the bank.

6. The method according to claim 1, further comprising:
receiving a use verification transaction sent by a user, the use verification transaction comprising a commodity identifier of a commodity acquired by sensing hardware equipped by the user and the contract address of the invoked smart contract; and
invoking, in response to the use verification transaction, commodity verification logic declared in the smart contract corresponding to the contract address, and returning information that the commodity is genuine to the user in a case of learning through query that the commodity identifier is stored in the blockchain.

7. The method according to claim 1, further comprising:
receiving an environmental monitoring transaction sent by the warehousing party, the environmental monitoring transaction comprising environmental data that is acquired by environmental sensing hardware equipped by the warehousing party and that is greater than a preset environmental threshold, and the contract address of the invoked smart contract; and
invoking, in response to the environmental monitoring transaction, environmental monitoring logic declared in the smart contract corresponding to the contract address, to store the environmental data in the blockchain.

8. The method according to claim 1, further comprising:
receiving a video surveillance transaction sent by the warehousing party, the video surveillance transaction comprising video data that is of potential safety hazards in a warehouse space and that is acquired by video sensing hardware equipped by the warehousing party, and the contract address of the invoked smart contract; and
invoking, in response to the video surveillance transaction, video surveillance logic declared in the smart contract corresponding to the contract address, to store the video data in the blockchain.

9. An apparatus for verifying commodities in batches based on a blockchain, wherein a traceability identifier associated with commodity identifiers of commodities in the same production batch and a distributor identifier associated with commodity identifiers of commodities distributed by the same distributor are recorded in the blockchain, and the apparatus comprises:
a receiving unit, configured to receive a warehousing verification transaction sent by a warehousing party, the warehousing verification transaction comprising a commodity identifier acquired by sensing hardware equipped by the warehousing party from any to-be-warehoused commodity and a contract address of an invoked smart contract;
a check unit, configured to invoke, in response to the warehousing verification transaction, check logic declared in the smart contract corresponding to the contract address, to check the commodity identifier; and
a verification unit, configured to invoke, in a case that the check succeeds, warehousing verification logic declared in the smart contract corresponding to the contract address, to query for a traceability identifier and a distributor identifier that are associated with the commodity identifier in the blockchain; determine target commodity identifiers that are present in both commodity identifiers associated with the distributor identifier and commodity identifiers associated with the traceability identifier; and update states corresponding to the target commodity identifiers recorded in the blockchain to warehousing verification success in batches.

10. The apparatus according to claim 9, wherein a storage location identifier associated with commodity identifiers of commodities at the same storage location is further recorded in the blockchain;
the receiving unit is further configured to receive an inventory verification transaction sent by the warehousing party after the distributor pledges commodities to a bank, the inventory verification transaction comprising a storage location identifier corresponding to the distributor identifier acquired by the sensing hardware equipped by the warehousing party and the contract address of the invoked smart contract;
the check unit is further configured to invoke, in response to the inventory verification transaction, the check logic declared in the smart contract corresponding to the contract address, to check the storage location identifier; and
the apparatus further comprises:
a pledge unit, configured to invoke, in a case that the check succeeds, inventory verification logic declared in the smart contract corresponding to the contract address, to query for a distributor identifier associated with the storage location identifier in the blockchain; determine target commodity identifiers that are present in both commodity identifiers associated with the distributor identifier and commodity identifiers associated with the storage location identifier; and update states corresponding to the target commodity identifiers recorded in the blockchain to inventory verification success in batches, for the bank to issue a loan to the distributor when determining that state data corresponding to the commodities pledged by the distributor is inventory verification success.

11. The apparatus according to claim 10, wherein
the receiving unit is further configured to receive a loan receiving transaction sent by the distributor after the distributor receives the loan issued by the bank; and
the pledge unit is further configured to invoke, in response to the loan receiving transaction, ownership change logic declared in the smart contract corresponding to the contract address, to update ownership corresponding to the commodity identifiers associated with the distributor identifier stored in the blockchain from the distributor to the bank.

12. The apparatus according to claim 11, wherein
the receiving unit is further configured to receive a loan repayment transaction sent by the bank after the bank receives the loan repaid by the distributor; and
the pledge unit is further configured to invoke, in response to the loan repayment transaction, the ownership change logic declared in the smart contract corresponding to the contract address, to update the ownership corresponding to the commodity identifiers associated with the distributor identifier stored in the blockchain from the bank to the distributor.

13. The apparatus according to claim 11, wherein
the receiving unit is further configured to receive a loan overdue transaction sent by the bank after the bank receives the loan repaid by the distributor; and
the pledge unit is further configured to invoke, in response to the loan overdue transaction, the ownership change logic declared in the smart contract corresponding to the contract address, to update ownership corresponding to the commodity identifiers associated with the distributor identifier stored in the blockchain from the distributor to the bank.

14. The apparatus according to claim 9, wherein
the receiving unit is further configured to receive a use verification transaction sent by a user, the use verification transaction comprising a commodity identifier of a commodity acquired by sensing hardware equipped by the user and the contract address of the invoked smart contract; and
the verification unit is further configured to invoke, in response to the use verification transaction, commodity verification logic declared in the smart contract corresponding to the contract address, and return information that the commodity is genuine to the user in a case of learning through query that the commodity identifier is stored in the blockchain.

15. The apparatus according to claim 9, wherein
the receiving unit is further configured to receive an environmental monitoring transaction sent by the warehousing party, the environmental monitoring transaction comprising environmental data that is acquired by environmental sensing hardware equipped by the warehousing party and that is greater than a preset environmental threshold, and the contract address of the invoked smart contract; and
the apparatus further comprises:
a monitoring unit, configured to invoke, in response to the environmental monitoring transaction, environmental monitoring logic declared in the smart contract corresponding to the contract address, to store the environmental data in the blockchain.

16. The apparatus according to claim 9, wherein
the receiving unit is further configured to receive a video surveillance transaction sent by the warehousing party, the video surveillance transaction comprising video data that is of potential safety hazards in a warehouse space and that is acquired by video sensing hardware equipped by the warehousing party, and the contract address of the invoked smart contract; and
the apparatus further comprises:
a monitoring unit, configured to invoke, in response to the video surveillance transaction, video surveillance logic declared in the smart contract corresponding to the contract address, to store the video data in the blockchain.

17. An electronic device, comprising:
a processor; and
a memory, configured to store processor executable instructions, wherein
the processor executes the executable instructions to implement the method according to any one of claims 1 to 8.
